# EUROPÄISCHE PATENTSCHRIFT

(11) **EP 0 789 134 B1**
(45) Veröffentlichungstag und Bekanntmachung des Hinweises auf die Patenterteilung: **07.05.2003**
(21) Anmeldenummer: 97810014.7
(22) Anmeldetag: 13.01.1997
(51) Int. Cl.: F01K 23/10

(54) **Verfahren zum Betrieb einer Kraftwerksanlage**
Process for operating a power plant
Procédé de fonctionnement d'une centrale d'énergie

(30) Priorität: 09.02.1996 DE 19604664
(43) Veröffentlichungstag der Anmeldung: 13.08.1997
(73) Patentinhaber: ALSTOM (Switzerland) Ltd, 5401 Baden (CH)
(72) Erfinder: Frutschi, Hansulrich, 5223 Riniken (CH)

(56) Entgegenhaltungen:
- EP-A- 0 767 290
- DE-C- 4 409 811
- US-A- 4 631 914

## Beschreibung

### Technisches Gebiet

Die vorliegende Erfindung betrifft ein Verfahren zum Betrieb einer Kraftwerksanlage gemäss Oberbegriff des Anspruchs 1.

### Stand der Technik

Bei einer Kraftwerksanlage, welche aus einer Gasturbogruppe, die insbesondere mit einer sequentiellen Verbrennung ausgestattet ist, einem nachgeschalteten Abhitzedampferzeuger und einem anschliessenden Dampfkreislauf besteht, ist es zur Erzielung eines maximierten Wirkungsgrades von Vorteil, im Damnpfkreislauf einen überkritischen Dampfprozess vorzusehen. Eine in diesem Sinn ähnliche Schaltung ist aus CH-480 535 bekanntgeworden. Darin wird zum Zweck einer optimalen Avbwärmenutzung der Gasturbogruppe im unteren Temperaturbereich des Abhitzedampferzeugers ein Massenstrom des Gasturbinenkreislaufmittels abgezweigt und in der Gasturbine rekuperativ genutzt. Diese Konfiguration führt aber in Falle moderner, vorzugsweise einwellig ausgelegter Gasturbinen zu einer unerwünschten Komplikation der Anlage im konstruktiven Bereich. Daneben darf nicht verkannt werden, dass sich die Leistung der bekanntgewordenen Anlage zwecks Ueberlastbetrieb nicht erhöhen lässt, was bei modernen Anlagen ein grosser Nachteil ist. Grundsätzlich soll die Einführung einer Dampfmenge in die Gasturbine, die eine Erhöhung deren Leistung auslöst, nicht dazu führen, dass parallel dazu eine grössere Leistungseinbusse einer nachgeschalteten Dampfturbine daraus resultiert.

Ein Verfahren zum Betreiben eines Abhitzedampferzeugers sowie ein danach arbeitender Abhitzedampferzeuger ist aus der Schrift DE-C1-44 09 811 bekannt. Bei diesem Verfahren erfolgt in einer ersten oder Hochdruckstufe eines Wasser-Dampf-Kreislaufes sowohl eine Vorwärmung von Speisewasser und die Verdampfung des vorgewärmten Speisewassers als auch eine Überhitzung des Dampfes durch Wärmetausch mit einem Wärme enthaltenden Arbeitsmittel. Um bei gleichzeitig hohem Wirkungsgrad den prozesstechnischen Aufwand besonders gering zu halten, wird in der Schrift DE-C1-44 09 811 vorgeschlagen, Dampf mindestens einer zweiten Druckstufe ausschliesslich durch Entspannen eines Teilstroms des vorgewärmten Speisewassers zu erzeugen. Bei einem danach arbeitenden Abhitzedampferzeuger mit einer Anzahl von in den Wasser-Dampf-Kreislauf einer Dampfturbine geschalteten Heizflächen ist für die zweite und jede weitere Druckstufe ein in den Wasser-Dampf-Kreislauf geschalteter-Entspannungsbehälter vorgesehen.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art die dampfkreislaufseitige Wärmeaufnahme im unterern Temperaturbereich des Abhitzedampferzeugers zu maximieren, und bei einer rekuperativen Nutzung der Dampfmenge innerhalb der Gasturbine einen grösseren Wirkungsgrad der Anlage zu erzielen.

Um die noch kalorisch hochwertigen Abgase aus der letzten Turbine bis hinunter auf 100°C und tiefer auszunützen, wird die dampfkreislaufseitige Wärmeaufnahme innerhalb einer ersten Wärmetauschstufe im unteren Bereich im Abhitzedampferzeuger, geläufig Economizer genannt, erhöht. Zu diesem Zweck wird diesem Economizer neben der Hauptspeisewassermenge eine Zusatzwassermenge zugeführt, wobei diese die Restwassermenge aus mindestens einer Ausdampfung ist. Diese Ausdampfung steht überdies in Wirkverbindung mit der Erzeugung einer Dampfmenge, welche an geeigneter Stelle der Gasturbine zugeführt wird. Vorzugsweise wird eine solche Dampfmenge stromab des Verdichters und bei einer Gasturbine mit sequentieller Befeuerung wahlweise auch stromab der Hochdruckturbine eingeblasen. Eine Dampfmenge kann je nach Auslegungskriterien der Gasturbogruppe auch in den Vedichter, vorzugsweise in der Endphase der Kompression, oder in eine Turbine eingeblasen werden, wobei die hier aufgezeigten Möglichkeiten einer Dampfeinblasung kumulativ oder alternativ gehandhabt werden könnnen. Zwecks Erhöhung des Ueberlastbetrieb der Gasturbine wird die genannte Dampfmenge mindestens teilweise der Brennkammer der Gasturbine zugeführt. Diese zugeführte Dampfmenge bewirkt eine entsprechende Erhöhung der Leistung der Turbine, welche grösser ist als die Leistungsabnahme in der Dampfturbine. Dies kommt dadurch zustande, dass die eingeführte Dampfmenge durch Brennstoff auf Heissgastemperatur gebracht wird, mindestens wie die Verdichterluft, wobei das Leistungspotential dieser Dampfmenge enorm gesteigert wird. Darüber hinaus erzeugt die eingeblasene Dampfmenge im Abhitzedampferzeuger ihrerseits auch wieder Dampf, wobei zu bemerken ist, dass die Wärmekapazität bei gleichem Temperaturniveau etwa doppelt so gross ist wie jene von Luft.

Ein weiterer Vorteil der Erfindung ergibt sich daraus, dass im Speisewasserbehälter und Entgaser des Dampfkreislaufes neben der Vorwärmung des Kondensates noch eine zusätzliche Dampfmenge entwickelt wird, welche der Dampfturbine an geigneter Stelle zugeführt wird.

Vorteilhafte und zweckmässige Weiterbildungen der erfindungsgemässen Aufgabenlösung sind in den weiteren Ansprüchen gekennzeichnet.

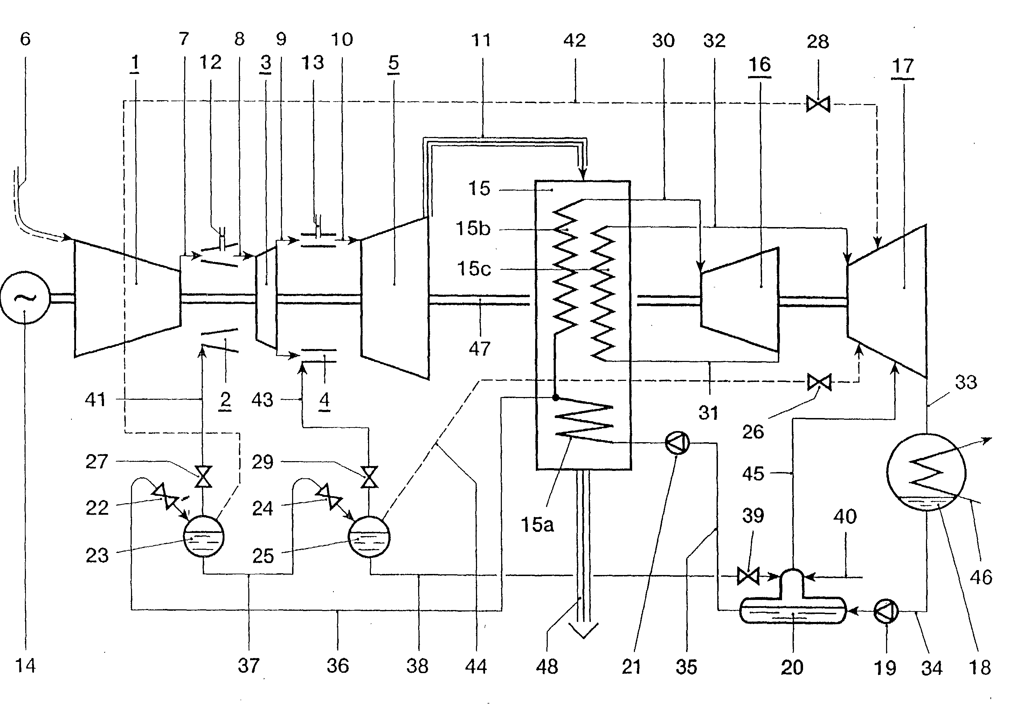

Im folgenden wird anhand der Zeichnung ein Ausführungsbeispiel der Erfindung näher erläutert. Alle für das unmittelbare Verständnis der Erfindung nicht erforderlichen Elemente sind fortgelassen worden. Die Strömungsrichtung der Medien ist mit Pfeilen angegeben.

### Kurze Beschreibung der Zeichnung

Die einzige Figur zeigt eine Schaltung einer Kraftwerksanlage.

### Wege zur Ausführung der Erfindung, gewerbliche Verwendbarkeit

Die Figur zeigt eine Kraftwerksanlage, welche aus einer Gasturbogruppe, einem der Gasturbogruppe nachgeschalteten Abhitzedampferzeuger, und einem diesem Abhitzedampferzeuger nachgeschalteten Dampfkreislauf besteht.

Die vorliegende Gasturbogruppe ist auf einer sequentiellen Verbrennung aufgebaut. Die in der Figur nicht ersichtliche Bereitstellung des zum Betrieb der verschiedenen Brennkammern notwendigen Brennstoffes 12, 13 kann beispielsweise durch eine mit der Gasturbogruppe zusammenwirkende Kohlenvergasung bewerkstelligt werden. Selbstverständlich ist es auch möglich, den zum Einsatz gelangenden Brennstoff aus einem Primärnetz zu beziehen. Wird die Versorgung eines gasförmigen Brennstoffes zum Betrieb der Gasturbogruppe über eine Pipeline bereitgestellt, so kann das Potential aus der Druckund/oder Temperaturdifferenz zwischen Primärnetz und Verbrauchernetz für die Belange der Gasturbogruppe, oder allgemein der Schaltung, rekuperiert werden. Die vorliegende Gasturbogruppe, die auch als autonome Einheit wirken kann, besteht aus einem Verdichter 1, einer dem Verdichter nachgeschalteten ersten Brennkammer 2, einer dieser Brennkammer 2 nachgeschalteten ersten Turbine 3, einer dieser Turbine 3 nachgeschalteten zweiten Brennkammer 4 und einer dieser Brennkammer 4 nachgeschalteten zweiten Turbine 5. Die genannten Strömungsmaschinen 1, 3, 5 weisen eine einheitliche Rotorwelle 47 auf. Diese Rotorwelle ist vorzugsweise auf zwei in der Figur nicht ersichtlichen Lagern gelagert, welche kopfseitig des Verdichters 1 und stromab der zweiten Turbine 5 plaziert sind. Der Verdichter 1 kann je nach Auslegung, beispielsweise um die spezifische Leistung zu erhöhen, in zwei oder mehrere nicht gezeigte Teilverdichter unterteilt werden. Bei einer solchen Konstellation wird dann stromab des ersten und stromauf des zweiten Teilverdichters ein Zwischenkühler geschaltet, in welchem die teilverdichtete Luft zwischengekühlt wird. Die in diesem ebenfalls nicht gezeigten Zwischenkühler anfallende Wärme wird optimal, also nutzbringend, in den Prozess rückgeführt. Die angesaugte Luft 6 strömt als verdichtete Luft 7 in ein nicht näher gezeigtes Gehäuse, das in sich den Verdichteraustritt und die erste Turbine 3 miteinschliesst. In diesem Gehäuse ist auch die erste Brennkammer 2 untergebracht, welche vorzugsweise als zusammenhängende Ringbrennkammer ausgebildet ist. Selbsverständlich kann die verdichtete Luft 7 zur ersten Brennkammer 2 aus einer nicht gezeigten Luftspeicheranlage beigestellt werden. Die Ringbrennkammer 2 weist kopfseitig, auf den Umfang verteilt, eine Anzahl von nicht näher gezeigten Brennern auf, welche vorzugsweise als Vormischbrenner ausgelegt sind. An sich können hier auch Diffusionsbrenner zum Einsatz gelangen. Im Sinne einer Reduzierung der Schadstoff-Emissionen aus dieser Verbrennung, insbesondere was die NOx-Emissionen betrifft, ist es indessen vorteilhaft, eine Anordnung von Vormischbrennern, beispielsweise gemäss EP-PS-0 321 809, vorzusehen, darüber hinaus auch die dort beschriebene Art der Zuführung des oder der Brennstoffe. Was die Anordnung der Vormischbrenner in Umfangsrichtung der Ringbrennkammer 2 anbelangt, so kann eine solche bei Bedarf von der üblichen Konfiguration gleicher Brenner abweichen, und stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration angeordnet ist. Die grossen Vormischbrenner, welche die Funktion von Hauptbrennern zu erfüllen haben, stehen zu den kleinen Vormischbrennern, welche die Pilotbrenner dieser Brennkammer sind, bezüglich der sie durchströmenden Brennerluft, also der verdichteten Luft aus dem Verdichter 1, in einem Grössenverhältnis zueinander, das fallweise festgelegt wird. Im gesamten Lastbereich der Brennkammer arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 2 sehr nahe an die Wirbelzentren der Pilotbrenner heran, so dass eine Zündung an sich nur mit diesen Pilotbrennern möglich ist. Beim Hochfahren wird die Brennstoffmenge, die über die Pilotbrenner zugeführt wird, soweit gesteigert, bis diese ausgesteuert sind, d.h. bis die volle Brennstoffmenge zur Verfügung steht. Die Konfiguration wird so gewählt, dass dieser Punkt der jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll ausgesteuert. Weil die durch die Pilotbrenner initiierte Konfiguration "kleiner" heisser Wirbelzentren zwischen den von den Hauptbrennern stammenden "qrossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die kleinen Wirbel der Hauptbrenner ein. Selbstverständlich kann die Ringbrennkammer 2 aus einer Anzahl einzelner rohrförmiger Brennräume bestehen, welche ebenfalls schrägringförmig, bisweilen auch schraubenförmig, um die Rotorachse angeordnet sind. Diese Ringbrennkammer 2, unabhängig von ihrer Auslegung, ist geometrisch so angeordnet, dass sie auf die Rotorlänge praktisch keinen Einfluss ausübt. Die Heissgasen 8 aus dieser Ringbrennkammer 2 beaufschlagen die unmittelbar nachgeschaltete erste Turbine 3, deren kalorisch entspannende Wirkung auf die Heissgase bewusst minimal gehalten wird, d.h. diese Turbine 3 wird demnach in der Regel aus nicht mehr als zwei Laufschaufelreihen bestehen. Bei einer solchen Turbine 3 wird nötig sein, einen Druckausgleich an den Stirnflächen zwecks Stabilisierung des Axialschubes vorzusehen. Die in der Turbine 3 teilentspannten Heissgase 9, welche unmittelbar in die zweite Brennkammer 4 strömen, weisen aus dargelegten Gründen eine recht hohe Temperatur auf, vorzugsweise ist diese Temperatur betriebsspezifisch so auszulegen, dass in der zweiten Brennkammer 4 im Zusammenhang mit der dort eingebrachten Brennstoff 13 eine Selbstzündung ausgelöst wird. Diese zweite Brennkammer 4 hat im wesentlichen die Form eines zusammenhängenden ringförmigen axialen oder quasi-axialen Ringzylinders. Sie kann selbstverständlich auch aus einer Anzahl axial, quasi-axial oder schraubenförmig angeordneter und in sich abgeschlossener Brennräume bestehen. Was die Konfiguration der ringförmigen, aus einem einzigen Brennraum bestehenden Brennkammer 4 betrifft, so sind in Umfangsrichtung und radial dieses ringförmigen Zylinders mehrere in der Figur nur andeutungsweise gezeigte Brennstofflanzen disponiert, welche dazu dienen, den Brennstoff 13 in die durch stromauf plazierten Mitteln ausgelösten Verwirbelungen einzudüsen. Diese Brennkammer 4 ist wie bereits vermerkt auf Selbstzündung ausgelegt: Die Verbrennung des in die teilentspannten Heissgase 9 aus Turbine 3 eingedüsten Brennstoffes 13 geschieht hier durch Selbstzündung, soweit freilich das Temperaturniveau eine solche Betriebsart zulässt. Ausgehend davon, dass die Brennkammer 4 mit einem gasförmigen Brennstoff, also beispielsweise Erdgas, betrieben wird, muss die Temperatur der teilentspannten Heissgase 9 aus der Turbine 3 noch recht hoch sein, soll die erwähnte Selbstzündung ausgelöst werden, und dies selbstverständlich auch bei Teillastbetrieb, was auf die Auslegung der Turbine 2 eine ursächliche Rolle spielt. Bei Gastemperaturen um die 1000°C ist eine sichere Selbstzündung gewährleistet. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 4, vorzugsweise an der Innen- und Aussenwand in Umfangsrichtung disponiert, die bereits genannten Mittel zur Auslösung von Verwirbelungen vorgesehen, die aus einer Reihe von nicht näher gezeigten Elementen bestehen, welche, wie bereits erwähnt, in axialer Richtung vorzugsweise stromauf der Brennstofflanzen plaziert sind. Die Aufgabe dieser Elemente besteht darin, Wirbel zu erzeugen, welche eine Rückströmzone, analog derjenige in den bereits erwähnten Vormischbrennern der ersten Brennkammer 2, induzieren, darüber hinaus sind sie dazu prädestiniert, eine optimale Gemischbildung mit dem eingedüsten Brennstoff 13 zu bewerkstelligen. Da es sich bei dieser Brennkammer 4, aufgrund der axialen Anordnung und der Baulänge, um eine Hochgeschwindigkeitsbrennkammer handelt, bei welcher die mittlere Geschwindigkeit der Arbeitsgase von ca. 60 m/s und mehr beträgt, müssen die wirbelerzeugenden Elemente strömungskonform ausgebildet sein. Anströmungsseitig sollen diese vorzugsweise aus einer tetraederförmigen Form mit anströmungsschiefen Flächen bestehen. Die wirbelerzeugenden Elemente können entweder an der Aussenfläche und/oder an der Innenfläche plaziert sein. Selbstverständlich können die wirbelerzeugenden Elemente auch axial zueinander verschoben sein. Die abströmungsseitige Fläche der wirbelerzeugenden Elemente ist im wesentlichen radial ausgebildet, so dass sich ab dort eine Rückströmzone einstellt. Die Selbstzündung in der Brennkammer 4 muss indessen auch in den transienten Lastbereichen sowie im Teillastbereich der Gasturbogruppe gesichert bleiben, d.h., es müssen Hilfsvorkehrungen vorgesehen werden, welche die Selbstzündung in der Brennkammer 4 auch dann sicherstellen, wenn sich eine Flexion bei der Temperatur der Gase im Bereich der Eindüsung des Brennstoffes 13 einstellen sollte. Um eine sichere Selbstzündung des in die Brennkammer 4 eingedüsten gasförmigen Brennstoffes zu gewährleisten, kann diesem eine kleine Menge eines anderen Brennstoffes mit einer niedrigeren Zündtemperatur beigegeben werden. Als "Hilfsbrennstoff" eignet sich hier beispielsweise Brennöl sehr gut. Der flüssige Hilfsbrennstoff, entsprechend eingedüst, erfüllt die Aufgabe, sozusagen als Zündschnur zu wirken, und ermöglicht auch dann eine Selbstzündung in der Brennkammer 4, wenn die teilentspannten Heissgase 9 aus der ersten Turbine 3 eine Temperatur unterhalb des angestrebten optimalen Niveaus von 1000°C aufweisen sollten. Diese Vorkehrung, Brennöl zur Sicherstellung einer Selbstzündung vorzusehen, erweist sich freilich immer dann als besonders angebracht, wenn die Gasturbogruppe mit stark reduzierter Last betrieben wird. Diese Vorkehrung trägt des weiteren entscheidend dazu bei, dass die Brennkammer 4 eine minimale axiale Länge aufweisen kann. Die kurze Baulänge der Brennkammer 4, die Wirkung der wirbelerzeugenden Elemente zur Flammenstabilisierung sowie die fortwährende Sicherstellung der Selbstzündung sind demnach dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich in einer optimierten Kühlung der Strukturen dieser Brennkammer 4 niederschlägt. Die in der Brennkammer 4 aufbereiteten Heissgase 10 beaufschlagen anschliessend eine nachgeschaltete zweite Turbine 5. Die thermodynamischen Kennwerte der Gasturbogruppe können so ausgelegt werden, dass die Abgase 11 aus der zweiten Turbine 5 noch soviel kalorisches Potential aufweisen, um damit über einen Abhitzedampferzeuger 15 Dampf zum Betreiben mindestens einer Dampfturbine zu ermöglichen. Die Leistungsabgabe der Strömungsmaschinen geschieht über einen verdichterseitig angekoppelten Generator 14, der auch als Anwurfmotor dienen kann. Die kalorisch ausgenutzten Abgase im Abhitzedampferzeuger 15 strömen anschliessend als Rauchgase 48 beispielsweise ins Freie.

Unter der Annahme, dass die Abgase 11, die den Abhitzedampferzeuger 15 durchströmen, eine Temperatur von ca. 620°C aufweisen, und unter der Bedingung eines minimalen Temperatursprunges von 20°C für den Wärmeübergang, könnten sie nur bloss bis auf 200°C nutzbringend abgekühlt werden. Um hier diesen Nachteil zu beheben, wird innerhalb einer Economizerstufe 15a, die Menge des durch eine Förderpumpe 21 eingebrachten Speisewassers 34 soweit erhöht, beispielsweise auf ca. 150%, je nach tiefstzulässiger Temperatur des Rauchgases 48, welche unter anderen eine Funktion des Säuretaupunktes ist, dass die Abkühlungskurve stärker ausfällt, d.h. die Abgase stärker abgekühlt werden. Im Zusammenhang mit der prozentualen Menge des Speisewassers gilt die Relation, dass 100% jene Nennwassermenge fixiert, die in Abhängigkeit zu der von den Abgasen 11 angebotenen Energie steht.

Ein Speisewasser 35, das eine Temperatur von ca. 60°C bei einem Druck von ca. 300 bar aufweist, wird an genannter Stelle in den Abhitzedampferzeuger 15 eingeleitet und dort zu Dampf von ca. 550°C thermisch aufgewertet. Das im Economizer 15a auf ca. 300°C aufgeheizte Speisewasser wird an dessen Ende in zwei Teilströme aufgeteilt. Der eine, hier grössere Teilwasserstrom von 100%, wird in einer darauffolgenden wärmetauschenden Stufe 15b zu überkritischem Hochdruckdampf 30 thermisch aufbereitet. Dadurch wird den Abgasen 11 innerhalb der Wirkungsstrecke der genannten Stufe 15b der Hauptteil ihrer Wärmeenergie entzogen. Nach einer ersten Expansion in einer Hochdruckdampfturbine 16 wird dieser Dampf 31 durch eine weitere wärmetauschende Stufe 15c im Abhitzedampferzeuger 15 geleitet, dort zwischenüberhitzt und als Mitteldruckdampf 32 einer Mitteldruck- und Niederdruckturbine 17, im folgenden kurz Mitteldruckturbine genannt, zugeführt.

Der schliesslich entspannte Dampf 33 aus der letztgenannten Dampfturbine 17 wird in einem durch ein Medium 46 gekühlten Kondensator 18 kondensiert. Durch eine stromab dieses Kondensators 18 wirkende Förderpumpe 19 wird das Kondensat 34 in den Speisewasserbehälter und Entgaser 20 geleitet, won wo aus der bereits beschrieben Kreislauf des Speisewassers 35 von Neuem anfängt. In diesem Speisewasserbehälter und Entgaser 20 wird neben der Vorwärmung des Kondensats auch noch eine Dampfmenge 45 erzeugt, welche an passender Stelle in die Mitteldruckdampfturbine 17 geleitet wird.

Das vorgenannte zusätzliche Speisewasser 35 wird am Ende des Economizers 15a über eine Leitung als Nebenwassermenge 36 abgenommen, über ein Regelorgan 22 auf einen etwas über den in der ersten Brennkammer 2 herrschenden Druck gedrosselt, und in eine Ausdampfflasche 23 geleitet. Dort bewirkt der über der Sättigung liegende Enthalpieanteil die Ausdampfung eines Teils des Wassers. Eine hier entstandene Dampfmenge 42 wird über eine mit einem Regelorgan 28 vesehene Leitung der Mitteldruckdampfturbine 17 an passender Stelle zugeführt. Das Restwasser 37 aus dieser Ausdampfflasche 23 gelangt über ein Regelorgan 24 in eine weitere Ausdampfflasche 25, wobei hier wieder eine Dampfmenge 44 entsteht, die in etwa auf dem Druckniveau der zweiten Brennkammer 4 steht, wobei dieser Dampf 44 über ein Regelorgan 26 ebenfalls an passender Stelle in die Mitteldruckdampfturbine 17 eingeleitet wird. Das nun noch verbleibende, etwa 200°C heisse Wasser 38 aus der Ausdampfflasche 25 wird über ein Regelorgan 39 dem Speisewasserbehälter und Entgaser 20 zugeführt, in welchem es die bereits genannte Vorwärmung des Speisewassers 35 auf ca. 60°C sowie die Dampfmenge 45 für die Mitteldruckdampfturbine 17 bewerkstelligt. Ueberlastbetrieb wird erstellt, indem mit den Ausdampfflaschen 23, 25 in Wirkverbindung stehende Regelorgane 27, 29 geöffnet werden. Gleichzeitig werden die für die zusätzliche Beaufschlagung der Mitteldruckdampfturbine 17 zuständigen Regelorgane 26, 28 entsprechend gedrosselt oder geschlossen, dergestalt, dass eine Dampfmenge 41, 43 aus den genannten Ausdampfflaschen 23, 25 in die jeweilige Brennkammer 2, 4 eingeblasen wird. Ueber eine Leitung wird Ersatzwasser 40 dem Speisewasserbehälter und Entgaser 20 nach Bedarf beigegeben. Die in die Brennkammern 2, 4 eingeblasenen Dampfmengen 41, 43 bewirken eine entsprechende Erhöhung der Leistung der Turbinen 3, 5, welche grösser ist als die Leistungsabnahme in der Mitteldruckdampfturbine 17. Dies kommt dadurch zustande, dass die jeweilige Dampfmenge 41, 43 durch Brennstoff auf Heissgastemperatur gebracht wird, wie dies für die Verdichterluft 7 und das teilentspannte Heissgas 9 geschieht. Das Leistungspotential daraus ist enorm. Ausserdem erzeugt der eingeblasene Dampf im Abhitzedampferzeuger 15 seinerseits auch wieder Dampf, wobei zu bemerken ist, dass die Wärmekapazität bei gleichem Temperaturniveau etwa doppelt so gross ist, wie jene von Luft. Diese Ueberlastungsmethode ist schaltungstechnisch betrachtet einfach und sehr schnell wirksam.

Zur verbesserten Exergienutzung der beschriebenen Ausdampfkaskade kann diese in mehr als zwei Stufen erfolgen.

Um eine gute Nutzung der Abgase 11 zu erzielen, kann selbstverständlich im Abhitzedampferzeuger 15 eine separate Dampferzeugungseinrichtung integriert werden, deren Dampf entweder in den Dampfkreislauf geleitet, oder in einer separaten Expansionsmaschine in Arbeit umgesetzt wird. Es kann aber auch ein Teilstrom der Abgase abgezweigt und in einem separaten Abhitzekessel verwertet werden. Statt Wasser kann in diesem Fall vorzugsweise ein Ammoniak/Wasser-Gemisch zur Anwendung gelangen. Aber auch andere Fluide, wie beispielsweise Freon, Propan, etc. sind einsetzbar. Eine gewisse Verbesserung der Nutzung der Abgase aus der Turbine bis zu einem tieferen Niveau ist auch dadurch realisierbar, dass durch eine nicht näher gezeigte Zusatzfeuerung im Abhitzedampferzeuger das Temperaturniveau an dessen Eintritt angehoben wird. Diese Massnahme bringt aber hinsichtlich des erreichbaren Wirkungsgrades keine nennnenswerten Verbesserungen mit sich.

### Bezugszeichenliste

- 1: Verdichter
- 2: Erste Brennkammer
- 3: Erste Turbine
- 4: Zweite Brennkammer
- 5: Zweite Turbine
- 6: Ansaugluft
- 7: Verdichtete Luft
- 8: Heissgase 1. Brennkammer
- 9: Teilentspannte Heissgase
- 10: Heissgase 2. Brennkammer
- 11: Abgase
- 12: Brennstoff 1. Brennkammer
- 13: Brennstoff 2. Brennkammer
- 14: Generator
- 15: Abhitzedampferzeuger
- 15a: Economizer
- 15b: Hochdruckdampfstufe
- 15c: Mitteldruckdampfstufe
- 16: Hochdruckdampfturbine
- 17: Mitteldruck- und Niederdruckdampfturbine
- 18: Kondensator
- 19: Förderpumpe Kondensator
- 20: Speisewasserbehälter und Entgaser
- 21: Förderpumpe
- 22: Regelorgan
- 23: Ausdampfflasche
- 24: Regelorgan
- 25: Ausdampfflasche
- 26: Regelorgan
- 27: Regelorgan
- 28: Regelorgan
- 29: Regelorgan
- 30: Ueberkritischer Dampf
- 31: Expandierter Dampf
- 32: Zwischenüberhitzter MD-Dampf
- 33: Entspannter Dampf
- 34: Kondensat
- 35: Speisewasser
- 36: Nebenwassermenge
- 37: Restwasser
- 38: Heisse Wasser aus der Ausdampfflasche 25
- 39: Regelorgan
- 40: Ersatzwasser
- 41: Dampfmenge
- 42: Dampfmenge
- 43: Dampfmenge
- 44: Dampfmenge
- 45: Dampfmenge
- 46: Kühlmedium des Kondensators
- 47: Rotorwelle
- 48: Rauchgase

## Patentansprüche

1. Verfahren zum Betrieb einer Kraftwerksanlage, im wesentlichen bestehend aus einer Gasturbine, einem der Gasturbogruppe nachgeschalteten Abhitzedampferzeuger, einem dem Abhitzedampferzeuger nachgeschalteten Dampfkreislauf und mindestens einem Generator, wobei die Gasturbine aus mindestens einem Verdichter, mindestens einer Brennkammer und mindestens einer Turbine besteht, und wobei die Abgase aus der letzten Turbine den Abhitzedampferzeuger durchströmen, in welchem die Erzeugung mindestens einer Dampfmenge zum Betreiben mindestens einer Dampfturbine des Dampfkreislaufes bereitgestellt wird, wobei in einer im unteren Temperaturbereich operierenden Wärmetauschstufe (15a) des Abhitzedampferzeugers (15) eine über einer Nennflüssigkeitsmenge liegende Flüssigkeitsmenge (35) zirkuliert, und wobei eine uber der Nennflüssigkeitsmenge liegende Nebenflüssigkeitsmenge (36) am Ende dieser Wärmetauschstufe (15a) abgezweigt und in mindestens einer Druckstufe (23, 25) ausgedampft wird,
**dadurch gekennzeichnet, dass**
eine hierin anfallende Dampfmenge (41, 43) stromab des Verdichters (1) in den Prozess der Gasturbine eingeleitet wird.

2. Verfahren nach Anspruch 1, **dadurch gekennzeichnet, dass** die Gasturbine mit einer sequentieller Verbrennung betrieben wird.

3. Verfahren nach den Ansprüchen 1 und 2, **dadurch gekennzeichnet, dass** die in der Druckstufe (23, 25) enstandene Dampfmenge (41, 43) stromab des Verdichters (1) und/oder in eine zur Gasturbine mit sequentieller Verbrennung gehörige Brennkammer (2, 4) eingeleitet wird.

4. Verfahren nach Anspruch 1, **dadurch gekennzeichnet, dass** die Nennflüssigkeitsmenge in einer unmittelbar der Wärmetauschstufe (15a) folgenden weiteren Wärmetauschstufe (15b) zu überkritischem Dampf (30) aufbereitet wird, der eine erste Dampfturbine (16) beaufschlagt, und dass in dieser Dampfturbine expandierter Dampf (31) in einer weiteren Wärmetauschstufe (15c) im Abhitzedampferzeuger (15) zu zwischenüberhitztem Dampf (32) aufbereitet wird, der anschliessend eine weitere Dampfturbine (17) beaufschlagt.

5. Verfahren nach Anspruch 1, **dadurch gekennzeichnet, dass** ein zum Dampfkreislauf gehöriger Speisewasserbehälter und Entgaser (20) als weitere Ausdampfstufe betrieben wird.

6. Verfahren nach Anspruch 1, **dadurch gekennzeichnet, dass** mindestens ein Teil der in der Druckstufe (23, 25) enstandene Dampfmenge mindestens in eine Dampfturbine (17) des Dampfkreislauf geleitet wird.

## Claims

1. Method for operating a power plant, essentially composed of a gas turbine, of a waste-heat steam generator located downstream of the gas turbine group, of a steam circuit located downstream of the waste-heat steam generator, and of at least one generator, the gas turbine being composed of at least one compressor, of at least one combustion chamber and of at least one turbine, and the waste gases from the last turbine flowing through the waste-heat steam generator, in which method the generation of at least a quantity of steam for operating at least one steam turbine of the steam circuit is provided, a fluid quantity (35) which is above a nominal fluid quantity circulating in a heat exchange stage (15a) of the waste-heat steam generator (15), the said heat exchange stage operating in the lower temperature range, and a secondary fluid quantity (36) which is above the nominal fluid quantity being branched off at the end of this heat exchange stage (15a) and undergoing steam release in at least one pressure stage (23, 25), **characterized in that** a steam quantity (41, 43) occurring therein is introduced into the process of the gas turbine downstream of the compressor (1).

2. Method according to Claim 1, **characterized in that** the gas turbine is operated with sequential combustion.

3. Method according to Claims 1 and 2, **characterized in that** the steam quantity (41, 43) obtained in the pressure stage (23, 25) is introduced downstream of the compressor (1) and/or into a combustion chamber (2, 4) belonging to the gas turbine with sequential combustion.

4. Method according to Claim 1, **characterized in that** nominal fluid quantity is treated in a further heat exchange stage (15b), directly following the heat exchange stage (15a), to produce supercritical steam (30) which is applied to a first steam turbine (16), and **in that**, in a further heat exchange stage (15c) in the waste-heat steam generator (15), steam (31) expanded in this steam turbine is treated to produce intermediately superheated steam (32) which is subsequently applied to a further steam turbine (17).

5. Method according to Claim 1, **characterized in that** a feedwater tank and deaerator (20) belonging to the steam circuit is operated as a further steam release stage.

6. Method according to Claim 1, **characterized in that** at least some of the steam quantity obtained in the pressure stage (23, 25) is routed at least into a steam turbine (17) of the steam circuit.

## Revendications

1. Procédé pour la conduite d'une centrale thermique, se composant essentiellement d'une turbine à gaz, d'un générateur de vapeur à récupération disposé à la suite du turbogroupe à gaz, d'un circuit de vapeur disposé à la suite du générateur de vapeur à récupération et d'au moins un générateur, dans lequel la turbine à gaz se compose d'au moins un compresseur, d'au moins une chambre de combustion et d'au moins une turbine, et dans lequel les gaz d'échappement de la dernière turbine circulent à travers le générateur de vapeur à récupération, dans lequel on assure la production d'au moins un débit de vapeur destiné à l'entraînement d'au moins une turbine à vapeur du circuit de vapeur, dans lequel on fait circuler dans un étage d'échange de chaleur (15a) du générateur de vapeur à récupération (15) opérant dans un domaine de température inférieur un débit de liquide (35) se situant au-dessus d'un débit de liquide nominal et dans lequel on dérive un débit de liquide auxiliaire (36) se situant au-dessus du débit de liquide nominal à l'extrémité de cet étage d'échange de chaleur (15a) et on l'évapore dans au moins un étage de pression (23, 25), **caractérisé en ce que** l'on introduit un débit de vapeur (41, 43) produit dans celui-ci dans le processus de la turbine à gaz en aval du compresseur (1).

2. Procédé suivant la revendication 1, **caractérisé en ce que** l'on conduit la turbine à gaz avec une combustion séquentielle.

3. Procédé suivant les revendications 1 et 2, **caractérisé en ce que** l'on introduit le débit de vapeur (41, 43) produit dans l'étage de pression (23, 25) en aval du compresseur (1) et/ou dans une chambre de combustion (2, 4) faisant partie de la turbine à gaz à combustion séquentielle.

4. Procédé suivant la revendication 1, **caractérisé en ce que** l'on convertit le débit de liquide nominal, dans un autre étage d'échange de chaleur (15b) suivant immédiatement l'étage d'échange de chaleur (15a), en vapeur surcritique (30), qui alimente une première turbine à vapeur (16), et **en ce que** l'on convertit la vapeur (31) détendue dans cette turbine à vapeur, dans un autre étage d'échange de chaleur (15c) dans le générateur de vapeur à récupération (15), en vapeur resurchauffée (32), qui alimente ensuite une autre turbine à vapeur (17).

5. Procédé suivant la revendication 1, **caractérisé en ce que** l'on fait fonctionner un réservoir d'eau d'alimentation et un dégazeur (20) faisant partie du circuit de vapeur comme étage d'évaporation supplémentaire.

6. Procédé suivant la revendication 1, **caractérisé en ce que** l'on conduit au moins une partie du débit de vapeur produit dans l'étage de pression (23, 25) au moins dans une turbine à vapeur (17) du circuit de vapeur.
